(19)

**Europäisches Patentamt**
**European Patent Office**
**Office européen des brevets**

(11) **EP 2 733 624 A1**

(12) **EUROPEAN PATENT APPLICATION**

(43) Date of publication:
21.05.2014 Bulletin 2014/21

(21) Application number: 12193336.0

(22) Date of filing: 20.11.2012

(51) Int Cl.:
*G06F 17/30* (2006.01)          *H04L 29/08* (2006.01)
*G06Q 30/02* (2012.01)          *H04M 3/487* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Bouzid, Makram**
  **91620 Nozay (FR)**
• **Betge-Brezetz, Stéphane**
  **91620 Nozay (FR)**

(74) Representative: **Camus, Olivier Jean-Claude et al**
  **Cabinet Camus Lebkiri**
  **87, rue Taitbout**
  **75009 Paris (FR)**

(54) **Method and apparatus for providing green recommendations of digital contents**

(57)     The present invention relates to a green recommender device (GR_RECM) of digital contents to deliver across a telecommunication network (NTW) to a user terminal (UE), said digital contents being hosted by at least one database (DTB) of said telecommunication network (NTW), said green recommender device (GR_RECM) comprising:
- a content selector (SELC) adapted for selecting a set of digital contents according to user's features;
- an estimator (ESTM) adapted for estimating, for each selected content, the green impact of its delivery from the host data center (DC1, DC2, DC3) to the user terminal (UE);
- a green content selector (GR_SELC) adapted for:
o computing, for each selected content, a global score depending on its estimated green impact and the predicted user interest for said content;
o extracting the top k selected contents which have the highest global scores ;

- an interface (INTF) adapted for notifying the k extracted contents to the user terminal (UE).

**Fig. 1**

EP 2 733 624 A1

**Description**

**FIELD OF THE INVENTION**

The present invention relates to recommendation systems of digital contents, adapted for selecting a set of contents matching the interests of a user.

**BACKGROUND**

A huge number of digital contents such as video on demand (VoD) or television channels are proposed by telecommunication operators and service providers. The delivery of these digital contents, notably video, represents a huge part of the traffic of telecommunication networks. For instance, in North America, the highest traffic during the peak hours is the traffic generated by the Netflix system, which is a VoD delivery system.

However, the delivery of Web and telecom services has an ecological impact in terms of energy consumption or carbon footprint. For instance, a research institute has estimated the cost of a simple Google request: a typical search on a desktop computer generates about seven grams of carbon dioxide, which is comparable with bringing a kettle to boil. Another study ("Shipping to Streaming: is this shift green ?", A. Seetharam et al., Green Networking '10, Proceeding of the first ACM SIGCOMM workshop on Green networking, New Delhi, India, 2010) compares the ecological cost between sending a movie as a DVD by mailing it to the customer house, or by delivering it as a VoD through a network. This study shows that non-energy optimized streaming of a movie through the Internet consumes approximately 78% of the energy needed to ship a movie, but has a carbon footprint that is approximately 100% higher.

**SUMMARY**

It is an object of the invention to reduce such ecological impact.

To this end, the invention provides a method for recommending digital contents to deliver across a telecommunication network to a user terminal, said digital contents being hosted by at least one data center of said telecommunication network, said method comprising:

- selecting a set of digital contents, according to user's features;
- estimating, for each selected content, the green impact of its delivery from the host data center to the user terminal;
- computing, for each selected content, a global score depending on its estimated green impact;
- extracting the top k selected contents which have the highest global scores;
- notifying the k extracted contents to the user terminal.

Indeed, regarding this huge number of content available for the end-users, recommendation systems, which aim at selecting a set of contents matching the interests of the end-user, have been introduced and are more and more deployed and adopted by the end-users. For instance, 60% of Netflix customers use recommendations, and 35% of Amazon's revenue comes from recommendations. As a consequence, the traffic generated by recommendation systems is becoming absolutely not negligible and these recommenders tend therefore to have an actual impact on the network traffic.

The invention thus provides a content recommendation technology that can select contents of interest to the user within a huge content catalogue, and which delivery will have the less ecological impact. The method consists in making a first filtering step of the content catalogue based on the user's preferences and/or profile, and then reorders the list according to the estimation of the end-to-end green impact of recommended content delivery. Content with high green impact would be promoted to the top of the recommendation list. The reordering is made based on computed scores for preselected contents, which are a combination between predicted user interest and green impact, to avoid disappointing user with recommendations of low interest and high green impact. The green impact is estimated based on the carbon footprint and the energy consumption of involved data center hosting the contents, the core networks and routers, the user access network (for example 3G, Wi-Fi, LAN), and the user device to deliver the content. The method also allows telecommunication operators to be compliant with the upcoming "green regulations" and is a mean to improve their image to their final customers in promoting their ecological business attitude.

According to not limited embodiments, the method can comprise one or more of the following additional characteristics:

- User's features comprise a user's profile including digital contents consumption history of said user.
- User's features comprise a user's profile including user's preferences for a digital content
- User's features comprise user's context information. This information is for example the time, the user location, the user mood, etc.
- The method comprises a preliminary step of receiving the user's features from the user terminal.
- The global score is computed as follows:

Score(c) = $\alpha$.Rating(c) + $\beta$.GreenImpact(c) with $\alpha + \beta = 1$,
where:

○ Score(c) is the global score for a content c;
○ Rating(c) is an estimator of the estimated appreciation degree of the user for the content c, computed according to the user's features;
○ GreenImpact(c) is the estimated green impact of the delivery of the content c;
○ $\alpha$ and $\beta$ are parameters such as $\alpha + \beta = 1$.

- The method comprises determining parameters $\alpha$ and $\beta$ according to the consumption history, such as the more the user has consumed digital contents having high green impact, the bigger $\beta$ is.
- The green impact depends on:

○ a primary carbon footprint corresponding to the carbon footprint due to energy consumed by all equipments along the delivery path from the data center to the user terminal;
○ a secondary carbon footprint corresponding to the carbon footprint spent for producing said equipments.

- The green impact is computed as follows:

$$GreenImpact(c) = \frac{1}{FirstFootprint(c) + SecondFootprint(c)}$$

where:

○ GreenImpact(c) is the estimated green impact of the delivery of the content c;
○ FirstFootprint(c) is the primary carbon footprint;
○ SecondFootprint(c) is the second carbon footprint.

- The method comprises ranking the top k selected contents according to their global scores.

In addition, there is provided a green recommender device of digital contents to deliver across a telecommunication network to a user terminal, said digital contents being hosted by at least one database of said telecommunication network, said green recommender device comprising:

- a content selector adapted for selecting a set of digital contents according to user's features;
- an estimator adapted for estimating, for each selected content, the green impact of its delivery from the host data center to the user terminal;
- a green content selector adapted for:

○ computing, for each selected content, a global score depending on its estimated green impact and the predicted user interest in the content;
○ extracting the top k selected contents which have the highest global scores;

- an interface adapted for notifying the k extracted contents to the user terminal.

According to a not limited embodiment, the green recommender device can comprise one or more of the following additional characteristics:

- The green content selector is adapted for ranking the top k selected contents according to their global scores.
- The estimator comprises:

○ a primary carbon footprint estimator adapted for estimating, for each selected content, the carbon footprint due to energy consumed by all equipments along the delivery path from the host data center to the user terminal;
○ a secondary carbon footprint estimator adapted for estimating the carbon footprint spent for producing said equipments.

- The green recommender device comprises a behavior estimator adapted for estimating, for all the selected contents, a parameter used for computing the global score's selected content, said parameter being such as the more the user has consumed digital contents having high green impact, the biggest the parameter is.
- The content selector is adapted for communicating with a database managing a list of available digital contents, the selecting being made among said list.

In addition, there is provided a computer program product for a computer, comprising a set of instructions, which when loaded into said computer, causes the computer to carry out the method previously described.

**BRIEF DESCRIPTION OF THE DRAWINGS**

Some embodiments of apparatus and/or methods in accordance with embodiments of the present invention are now described, by way of example only, and with reference to the accompanying drawings, in which:

- figure 1 schematically illustrates a green recommender device according to a non limited embodiment of the invention;
- figure 2 shows a flowchart which schematically illustrates a method according to a non limited embodiment of the invention.

**DESCRIPTION OF EMBODIMENTS**

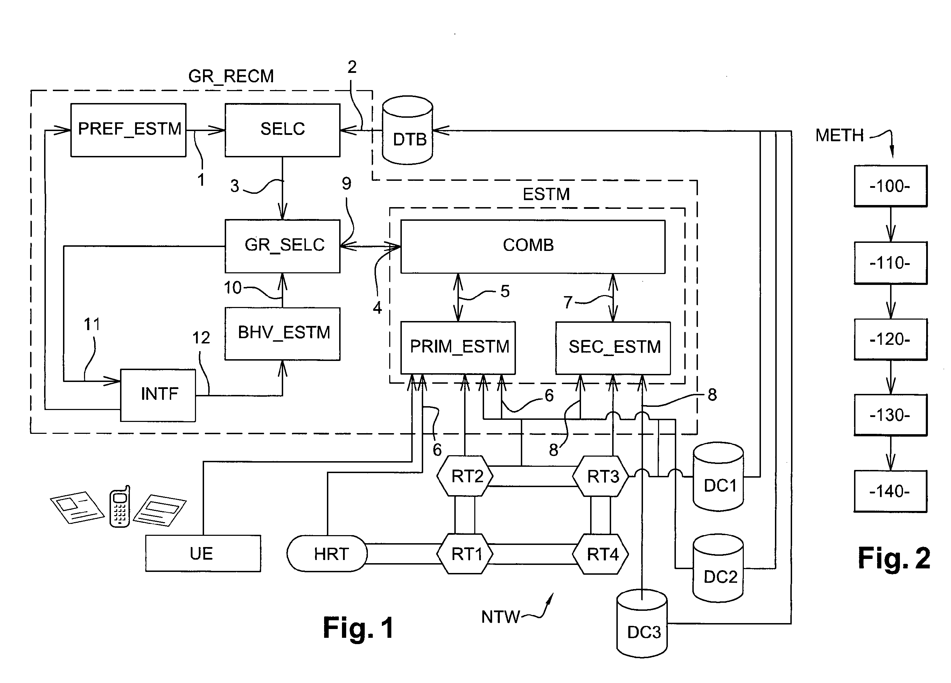

In the following description, well-known functions or constructions by the man skilled in the art are not described in detail since they would obscure the invention in unnecessary detail.
The present invention relates to a method METH for recommending digital contents to a user. Said method METH is carried out by a green recommender device GR_RECM, whose a non limited embodiment is detailed hereafter. A green recommender device GR_RECM according to an embodiment is illustrated in figure 1, and steps of the method METH are shown in figure 2.
Digital contents are likely to be delivered across a telecommunication network NTW to a user terminal UE, if said user would like to get them. They are to be consumed online, for example using a streaming technology, or offline on the user terminal UE after their download over the Internet. The user terminal UE is for example a mobile device, a laptop, a set-top box, etc.
Digital contents are hosted by data centers DC1, DC2, DC3 of the telecommunication network NTW. These data center DC1, DC2, DC3 are content sources hosting the digital content that the user can access from its terminal UE. They can, for example, correspond to the original store of a content provider and some caches for content duplication in different geographic locations. It is to be noted that data centers can also be all user terminals connected to the network NTW, so as to deliver contents by the peer-to-peer technology.
The list of available content and their descriptions, for example metadata, are communicated to a database DTB, also named content catalog, to be used by the green recommender device GR_RECM. Said content catalog is a database in charge of hosting the lists of available contents that a user can access in the scope of a particular application. The database DTB is populated by the different data centers DC1, DC2, DC3.
Digital contents are recommended to a user according to features related to the user, and according to their green impact. The user's features are:

- the user's profile including user's preferences for a digital content, and
- some user's context information, such as the time, the user location, the mood, etc.

A user profile is a collection of personal data associated to a specific user. A profile refers therefore to the explicit digital representation of a person's identity. A user profile can also be considered as the computer representation of a user model. A profile can be used to store the description of a person and/or his/her preferences. The user profile can be built explicitly by the user, for example through forms, questionnaires, etc, and/or implicitly by analyzing (data mining) user consumption traces (this is called a profiling process) via a preference estimator PREF_ESTM. It is to be noted that the preference estimator can also be hosted by the user equipment UE, instead of being hosted by the green recommender device GR_RECM.
User preferences are either communicated explicitly by the user to the green recommender device GR_RECM through the interface INTF, or inferred by the green recommender device GR_RECM from user consumptions.

According to a not limited embodiment, the green recommender device GR_RECM comprises:

- an interface INTF, also named green recommender interface;
- a content selector SELC, which is a classical recommendation system;
- a green content selector GR_SELC, also named green recommendation component;
- an estimator ESTM, also named green impact predictor;
- a behavior estimator BHV_ESTM, also named green behavior estimator.

The interface INTF

The user can access the green recommendation device GR_RECM from its terminal UE using the interface INTF. When the user asks for a digital contents recommendation, his profile and preferences are communicated to the content selector SELC through link 1. In another embodiment, the user's profile is hosted by the content selector SELC and the user has just to authenticate to activate or retrieve his profile.

The interface INTF is also responsible for displaying the received lists of recommendations to the user with the indications on the green impact of each recommended content, which can be presented to the user using for example a Green Star scale (link 11). After the selection and consumption of a content by the user, this interface INTF sends the information about selected content to the behavior estimator BHV_ESTM (link 12) to evaluate and update the information about the green behavior of the user.

The content selector SELC

The content selector SELC makes a first selection of a list of content matching the user's features, such as in classical recommendation systems. The selection is realized for example by a content-based filtering algorithm, a collaborative-filtering one, or a hybrid solution mixing both of them. The selection is made among the available content described in the content catalog database DTB that is communicated to the content selector SELC through (link 2). The content selector SELC estimates a rating Rating(c), for example between 0 and 1, indicating how much the user would appreciate the content c based on past user consumptions stored or modeled in his profile.

The green content selector GR SELC

This component gets as inputs the list of initially selected content generated by the content selector SELC, through link 3. The green content selector GR_SELC checks the green impact of the delivery of each content c from its source, that is to say the data center DC1 or DC2 or DC3 hosting the content, to the user terminal UE. The green impact is estimated by the estimator ESTM, which communicates with the green content selector GR_SELC through links 4 and 9.

The green content selector GR_SELC then computes a global score Score(c) for each content c, as follows:

$$Score(c) = \alpha.Rating(c) + \beta.GreenImpact(c);$$
where:

- Score(c) is the global score for a content c;
- Rating(c) is an estimator of the appreciation degree of the user for the content c, computed according to the user's features;
- GreenImpact(c) is the estimated green impact of the delivery of the content c;
- $\alpha$ and $\beta$ are parameters such as $\alpha + \beta = 1$.

The parameters $\alpha$ and $\beta$ are chosen according to the green behavior of the user which is provided as an input by the behavior estimator BHV_ESTM (link 10). For example, if the user is a green "addictive", $\alpha$ will be set to a small value, to give less importance to user's tastes, and $\beta$ will be big, to give more importance to the green impact of the content.

The green content selector GR_SELC then selects the top k items having the highest global scores and generates a revised list of content recommendations. The new list of selected content are then sent to the interface INTF along the indications of the Green Impact of each recommended content (link 11).

In one embodiment, k is an intrinsic parameter of the green content selector GR_SELC, determined according to statistical studies about the number of recommended contents necessary for obtaining at least one content which interests the user. For example k=10 or k=20. In another embodiment, k is settled by the user via the interface INTF.

In another embodiment of the invention, the green content selector GR_SELC suggests to the user to use another access network available around him with a better green impact and/or to use another terminal UE with a better green impact too, for example a less energy consuming user terminal UE that also suits for the consumption/download of a recommended content.

It is to be noted that if a same digital content is available from two data centers DC1, DC2, DC3, the green content selector GR_SELC would privilege the recommendation of the content coming from the data center DC1, DC2, DC3 with the lowest carbon footprint and energy consumption (if the green impact of the rest of the delivery infrastructure remains the same when changing the source data center). Moreover, if a user has two terminals UE available next to him, the green content selector GR_SELC would also suggest him to use the one with the best green impact (also if the green impact of the rest of the delivery infrastructure remains the same). Indeed, the different user's terminals can be memorized in the user profile. It is to be noted that the green impact of a terminal can change, for example if the Wi-Fi and/or the Bluetooth are activated. Moreover, if the terminal with the best green impact is not appropriate, for example if its screen is too small, then this terminal is not suggested.

The estimator ESTM

The estimator ESTM is in charge of estimating the green impact of the delivery of a content from its source host (a data center DC1, DC2, DC3) to the user terminal UE. The estimator ESTM comprises:

- a primary carbon footprint estimator PRIM_ESTM;
- a secondary carbon footprint estimator SEC_ESTM;
- a combiner COMB.

Indeed, the green impact is estimated based on the estimation of a primary carbon footprint and a secondary carbon footprint:

- The primary carbon footprint, estimated by the primary carbon footprint estimator PRIM_ESTM, corresponds to the carbon footprint, for example in kilograms of $CO_2$, due to the energy consumed by all the equipments all along the delivery path of the content. It takes into account the content characteristics (size, estimated delivery time, the required bandwidth for its delivery, etc) and estimates the carbon footprint of the energy consumptions of the following elements (links 6 and 8):

  o the data center DC1 or DC2 or DC3 hosting the content,
  o the core network and routers,
  o the user access network, whether his is connected using 3G network NTW, Wi-Fi, LAN, etc,
  o the user terminal UE to consume the content online or to download it for offline consumption.

Existing statistical analysis and models of energy consumption and primary carbon footprint of the different equipments can be used to make such above estimations.

- The secondary carbon footprint, also called grey energy, which is estimated by the secondary carbon footprint estimator SEC_ESTM, corresponds to the carbon footprint, for example in kilograms of $CO_2$, spent for producing all these equipments (brought by the delivery of one content). The secondary carbon footprint estimator SEC_ESTM estimates the secondary carbon footprint spent for producing all the equipments involved in the delivery of a content from its source host (a datacenter DC1 or DC2 or DC3) to the user terminal UE. It can takes into account the estimated production carbon footprint of the following elements (links 6 and 8):

  o the data center DC1 or DC2 or DC3 hosting the content,
  o the core network and routers,
  o the user access network, whether his is connected using 3G network NTW, WiFi, LAN, etc,
  o the user terminal UE to consume the content online or to download it for offline consumption.

Existing statistical analysis and models of equipments carbon footprint can be used to make such above estimations.
Then, the combiner COMB combines the primary carbon footprint (link 5) and the secondary carbon footprint (link 7) to compute the overall green impact. This combination is configurable by the operator. It can be a simple inverse of the addition, but it could be also computed with other formula depending on the strategy of the operator.

The behavior estimator BHV ESTM

The behavior estimator BHV-_ESTM receives the information about selected content by the user and its estimated green impact from the interface INTF (link 12), with the global list of recommended items, and update the classification of the user green behavior when needed. A relevance feedback approach, like Rocchio algorithm (J. Rocchio, Relevance Feedback in Information Retrieval, chapter 14, pages 313-323, Prentice-Hall, 1971), can be used to update the information about the user green behavior. The classification of the green behavior of a user could run from for example low to high, on a more or less fine-grained scale, and updated through the time after the user selection of content from the recommendation list according to the estimated content's green impact.

In one embodiment, the behavior estimator BHV_ESTM also ranks users with another, according to their green behaviors. All users could for example see the top ten of greenest users, which could encourage the others to behave greener.

On the other hand, the method METH for recommending digital contents comprises:

- selecting 100 a set of digital contents, according to the user's features. Selection is made by the content selector SELC, as previously explained.
- Estimating 110, for each selected content, the green impact of its delivery from the host data center DC1 or DC2 or DC3 to the user terminal UE. Estimation is made by the estimator ESTM, as previously explained.
- Computing 120, for each selected content, a global score depending on its estimated green impact and the predicted user interest for the content. Computing the global score is made by the green content selector GR_SELC, as previously explained.
- Extracting 130 the top k selected contents which have the highest global scores score. Extraction is also made by the green content selector GR_SELC, as previously explained.
- Notifying 140 the k extracted contents to the user terminal UE. Notification is realized via the interface INTF, as previously explained.

## Claims

1. - Method (METH) for recommending digital contents to deliver across a telecommunication network (NTW) to a user terminal (UE), said digital contents being hosted by at least one data center (DC1, DC2, DC3) of said telecommunication network (NTW), said method (METH) comprising:

   - selecting a set of digital contents, according to user's features;
   - estimating, for each selected content, the green impact of its delivery from the host data center (DC1, DC2, DC3) to the user terminal (UE);
   - computing, for each selected content, a global score depending on its estimated green impact and the predicted user interest for said selected content;
   - extracting the top k selected contents which have the highest global scores;
   - notifying the k extracted contents to the user terminal (UE).

2. - Method (METH) according to the previous claim, wherein user's features comprise a user's profile including digital contents consumption history of said user.

3. - Method (METH) according to any of the previous claims, wherein user's features comprise a user's profile including user's preferences for a digital content.

4. - Method (METH) according to any of the previous claims, wherein user's features comprise user's context information.

5. - Method (METH) according to the previous claim, comprising a preliminary step of:

   - receiving the user's features from the user terminal (UE).

6. - Method (METH) according to any of the previous claims, wherein the global score is computed as follows:

   Score(c) = $\alpha$.Rating(c) + $\beta$.GreenImpact(c) with $\alpha + \beta = 1$,
   where:

      - Score(c) is the global score for a content c;
      - Rating(c) is an estimator of the appreciation degree of the user for the content c, computed according to the user's features;
- GreenImpact(c) is the estimated green impact of the delivery of the content c;
- α and β are parameters such as α + β = 1.

7. - Method (METH) according to claims 2 and 5, comprising:

- Determining parameters α and β according to the consumption history, such as the more the user has consumed digital contents having high green impact, the bigger β is.

8. - Method (METH) according to any of the previous claims, wherein the green impact depends on:

- a primary carbon footprint corresponding to the carbon footprint due to energy consumed by all equipments along the delivery path from the data center (DC1, DC2, DC3) to the user terminal (UE);
- a second carbon footprint corresponding to the carbon footprint spent for producing said equipments.

9. - Method (METH) according to the previous claim, wherein the green impact is computed as follows:

$$\text{GreenImpact}(c) = \frac{1}{\text{FirstFootprint}(c) + \text{SecondFootprint}(c)}$$

where:

- GreenImpact(c) is the estimated green impact of the delivery of the content c;
- FirstFootprint(c) is the primary carbon footprint;
- SecondFootprint(c) is the second carbon footprint.

10. - Method (METH) according to any of the previous claims, comprising ranking the top k selected contents according to their global scores.

11. - A green recommender device (GR_RECM) of digital contents to deliver across a telecommunication network (NTW) to a user terminal (UE), said digital contents being hosted by at least one database (DTB) of said telecommunication network (NTW), said green recommender device (GR_RECM) comprising:

- a content selector (SELC) adapted for selecting a set of digital contents according to user's features;
- an estimator (ESTM) adapted for estimating, for each selected content, the green impact of its delivery from the host data center (DC1, DC2, DC3) to the user terminal (UE);
- a green content selector (GR_SELC) adapted for:

o computing, for each selected content, a global score depending on its estimated green impact and the predicted user interest for the content;
o extracting the top k selected contents which have the highest global scores ;

- an interface (INTF) adapted for notifying the k extracted contents to the user terminal (UE).

12. - A green recommender device (GR_RECM) according to the previous claim, wherein the green content selector (GR_SELC) is adapted for ranking the top k selected contents according to their global scores.

13. - A green recommender device (GR_RECM) according to any one of claims 11 to 12, wherein the estimator (ESTM) comprises:

- a primary carbon footprint estimator (PRIM_ESTM) adapted for estimating, for each selected content, the carbon footprint due to energy consumed by all equipments along the delivery path from the host data center (DC1, DC2, DC3) to the user terminal (UE);
- a secondary carbon footprint estimator (SEC_ESTM) adapted for estimating the carbon footprint spent for producing said equipments.

**14.** - A green recommender device (GR_RECM) according to any one of claims 11 to 13, comprising a behavior estimator (BHV_ESTM) adapted for estimating, for each selected content, a parameter used for computing the global score's selected content, said parameter being such as the more the user has consumed digital contents having high green impact, the biggest the parameter is.

**15.** - A green recommender device (GR_RECM) according to any one of claims 11 to 14, wherein the behavior estimator (BHV_ESTM) is adapted for ranking the users connected to the communication network (NTW) according to their consumption of green digital contents, and the interface (INTF) is adapted for notifying at least a part of said ranking to the user terminal (UE).

**16.** - A green recommender device (GR_RECM) according to any one of claims 11 to 15, wherein the content selector (SELC) is adapted for communicating with a database (DTB) managing a list of available digital contents, the selecting being made among said list.

**17.** - A computer program product (PG) for a computer, comprising a set of instructions, which when loaded into said computer, causes the computer to carry out the method (METH) according to any one of the previous claims 1 to 10.

**Fig. 1**

NTW

**Fig. 2**

METH

-100-

-110-

-120-

-130-

-140-

EP 2 733 624 A1

| | Europäisches Patentamt European Patent Office Office européen des brevets | **EUROPEAN SEARCH REPORT** | Application Number EP 12 19 3336 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | A. SEETHARAM ET AL.: "Shipping to Streaming: is this shift green ?", GREEN NETWORKING '10, PROCEEDING OF THE FIRST ACM SIGCOMM WORKSHOP ON GREEN NETWORKING, NEW DELHI, INDIA, 1 January 2010 (2010-01-01), XP002694488, * abstract * * page 61, column 1, paragraph 2 - page 61, column 2, paragraph 5 * * page 62, column 1, paragraph 4 - page 65, column 1, paragraph 4 * * page 66, column 1, paragraph 4 - page 66, column 2, paragraph 2 * ----- | 1-17 | INV. G06F17/30 H04L29/08 G06Q30/02 ADD. H04M3/487 |
| X | JP 2009 212744 A (KYOCERA MITA CORP) 17 September 2009 (2009-09-17) * abstract * ----- | 1-17 | |
| X | US 2012/209907 A1 (ANDREWS ANTON O A [US] ET AL) 16 August 2012 (2012-08-16) * abstract * * paragraph [0002] - paragraph [0008] * * paragraph [0096] - paragraph [0097] * * paragraph [0101] * ----- | 1-17 | TECHNICAL FIELDS SEARCHED (IPC) G06F H04L G06Q H04M |

The present search report has been drawn up for all claims

| Place of search | Date of completion of the search | Examiner |
|---|---|---|
| The Hague | 26 March 2013 | Molinari, Fausto |

**ANNEX TO THE EUROPEAN SEARCH REPORT
ON EUROPEAN PATENT APPLICATION NO.**

EP 12 19 3336

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2013

| Patent document cited in search report | Publication date | Patent family member(s) | Publication date |
|---|---|---|---|
| JP 2009212744 A | 17-09-2009 | NONE | |
| US 2012209907 A1 | 16-08-2012 | CN 102646109 A<br>TW 201237789 A<br>US 2012209907 A1<br>WO 2012112330 A2 | 22-08-2012<br>16-09-2012<br>16-08-2012<br>23-08-2012 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. SEETHARAM et al.** Shipping to Streaming: is this shift green ?. *Green Networking '10, Proceeding of the first ACM SIGCOMM workshop on Green networking, New Delhi, India,* 2010

- **J. ROCCHIO.** Relevance Feedback in Information Retrieval. Prentice-Hall, 1971, 313-323